# EUROPÄISCHE PATENTSCHRIFT

(11) **EP 2 613 491 B1**
(45) Veröffentlichungstag und Bekanntmachung des Hinweises auf die Patenterteilung: **05.02.2020**
(21) Anmeldenummer: 12195713.8
(22) Anmeldetag: 05.12.2012
(51) Int. Cl.: H04W 12/02, H04L 29/06, H04W 4/60, H04W 4/80

(54) **Ausführung von kryptografischen Operationen mit Daten eines Nutzerendgeräts**
Execution of cryptographic operations with data from a user terminal
Exécution d'opérations cryptographiques avec les données d'un poste terminal d'utilisateur

(30) Priorität: 03.01.2012 DE 102012200043
(43) Veröffentlichungstag der Anmeldung: 10.07.2013
(73) Patentinhaber: Vodafone Holding GmbH, 40213 Düsseldorf (DE)
(72) Erfinder: Nozulak, Thorsten, 45711 Datteln (DE); Seifert, Ulrich, 40468 Düsseldorf (DE); Rigal, Cedric, 47877 Willich (DE)
(74) Vertreter: Jostarndt Patentanwalts-AG

(56) Entgegenhaltungen:
- EP-A1- 2 369 543
- KR-B1- 101 073 937
- US-A1- 2011 250 839
- Daniel Ericsson: "The role of SIM OTA and the Mobile Operator in the NFC environment", , 1. April 2009 (2009-04-01), Seiten 1-12, XP055018251, Gefunden im Internet: URL:http://www.paymentscardsandmobile.com/ research/reports/SIM-OTA-Mobile-Operator-r ole-NFC.pdf [gefunden am 2012-02-02]

## Beschreibung

Die Erfindung befasst sich mit der Ausführung von kryptografischen Operationen. Insbesondere betrifft die Erfindung ein Mobilfunkendgerät und ein Verfahren zum Ausführen einer kryptografischen Operation mit Daten, die in einem Nutzerendgerät vorhanden sind.

Zur Sicherung von elektronischen Daten gegen unbefugtes Lesen und Verändern haben vor allem kryptografische Verfahren große Bedeutung erlangt. Um Daten auf einem Übertragungsweg oder an einem Speicherort vor unberechtigten Zugriffen zu schützen, ist es üblich, die Daten beim Absenden oder Speichern zu verschlüsseln und beim Empfang oder beim Auslesen zu entschlüsseln. Um unberechtigte Manipulationen von Daten zu verhindern bzw. aufdecken zu können, werden digitale Signaturen eingesetzt. Diese enthalten eine in der Regel als Hashwert ausgestaltete verschlüsselte Information, die charakteristisch für die geschützten Daten ist ("Fingerabdruck" der Daten) und zur Integritätsprüfung verwendet werden kann.

Kryptografische Operationen können mit symmetrischen und asymmetrischen Kryptosystemen durchgeführt werden. In symmetrischen Kryptosystemen wird zur Ver- und Entschlüsselung der gleiche Schlüssel eingesetzt. In asymmetrischen Kryptosystemen werden unterschiedliche Schlüssel zum Ver- und Entschlüsseln eingesetzt. Die Schlüssel bilden ein Paar, in dem üblicherweise ein geheimer und ein öffentlicher Schlüssel enthalten ist. Die in symmetrischen Kryptosystemen eingesetzten Schlüssel sowie die geheimen Schlüssel in asymmetrischen Kryptosystemen müssen derart gespeichert werden, dass sie vor unberechtigten Zugriffen geschützt sind. Zudem müssen die kryptografischen Verfahren in einer sicheren Umgebung durchgeführt werden, um unberechtigte Zugriffe auf geheime Informationen zu verhindern.

In Mobilfunkendgeräten kann die erforderliche Absicherung der kryptografischen Schlüssel und Prozesse dadurch erfolgen, dass die Schlüssel in einer Teilnehmeridentifikationseinrichtung des Endgeräts gespeichert werden und in der Einrichtung auch die kryptografischen Prozesse ausgeführt werden. Die Teilnehmeridentifikationseinrichtung ist eine spezielle gesicherte Einheit des Mobilfunkendgeräts, in der auch Daten und Prozesse zur Teilnehmeridentifizierung und -authentifizierung in Mobilfunknetzen in sicherer Weise gespeichert bzw. ausgeführt werden. In der Regel ist die Einheit als eine Chipkarte ausgeführt, die in das Mobilfunkendgerät eingesetzt wird. In GSM (Global System for Mobile Communications)-Netzen wird diese Chipkarte als SIM (Subscriber Identification Module)-Karte bezeichnet und in UMTS (Universal Mobile Telecommunications System)-Systemen werden Chipkarten eingesetzt, die auch als UICC (Universal Integrated Circuit Card) bezeichnet werden und ein USIM (Universal SIM) enthalten.

Die Teilnehmeridentifikationseinrichtung kann verwendet werden, um kryptografischen Operation mit Daten, die in dem Mobilfunkendgerät gespeichert sind bzw. gesendet oder empfangen werden, durchzuführen. In der DE 10 2009 004 113 A1 wird beispielsweise beschrieben, dass ein Vertrags, der in einem Mobilfunkendgerät vorliegt, in einer SIM-Karte des Endgeräts digital signiert wird. In der Regel sind Ver- und Entschlüsselung sowie andere kryptografische Operation jedoch auch für Daten durchzuführen, die Nutzer in anderen Endgeräten, wie beispielsweise Notebooks oder anderen Computer, verwenden. Damit ein Nutzer seine kryptografischen Schlüssel in seinem Mobilfunkendgerät und zur Durchführung von kryptografischen Operation in einem oder mehreren weiteren Endgeräten nutzen kann, müssen Kopien der Schlüssel in jedem Endgerät gespeichert werden. Dies ist für den Nutzer mit einem erheblichen Aufwand verbunden. Zudem verfügen die weiteren Endgeräte häufig nicht über gesicherte Einrichtungen, deren Sicherheitsniveau demjenigen von Teilnehmeridentifikationseinrichtungen von Mobilfunkendgeräten entspricht. Solche Einrichtungen müssten mit erheblichem Aufwand nachgerüstet werden, wenn eine gleich große Sicherheit erreicht werden soll, wie sie das Mobilfunkendgerät bietet.

Vor diesem Hintergrund ist es eine Aufgabe der Erfindung, eine möglichst sichere und gleichzeitig einfache Durchführung von kryptografischen Operationen mit Daten zu ermöglichen, die in einem weiteren Nutzerendgerät verwendet werden.

Die EP 2 369 543 A1 offenbart ein mit einer Steuereinrichtung ausgestattetes mobiles elektronisches Gerät mit Authentifizierungsfunktion zur Nutzung transaktionsbasierter Dienste, welches über eine mit einer SIM-Karte nutzbare Mobilfunksende- und Empfangseinheit verfügt oder mit einer solchen Mobilfunksende- und Empfangseinheit koppelbar ist. Die SIM-Karte verfügt über kryptografische Funktionen für die Verschlüsselung von im Rahmen der Dienstnutzung ausgeführten Transaktionen.

Die Aufgabe wird gelöst durch ein Mobilfunkendgerät nach Anspruch 1 und durch ein Verfahren nach Anspruch 14. Ausgestaltungen des Mobilfunkendgeräts und des Verfahrens sind in den abhängigen Ansprüchen angegeben.

Gemäß einem ersten Aspekt schlägt die Erfindung ein Mobilfunkendgerät zum Ausführen einer kryptographischen Operation mit Daten vor. Die Daten werden in einem separatem Nutzerendgerät verwendet. Das Mobilfunkendgerät umfasst eine Kommunikationsschnittstelle zum Herstellen einer temporären Verbindung mit dem Nutzerendgerät, wobei die Kommunikationsschnittstelle eingereichtet ist, die Daten von dem Nutzerendgerät zu empfangen. Weiterhin umfasst das Mobilfunkendgerät eine Kryptoeinheit, die dazu ausgestaltet ist, die kryptographische Operation mit den über die Kommunikationsschnittstelle empfangenen Daten für das Nutzerendgerät auszuführen, wobei die Kryptoeinheit in einer Teilnehmeridentifikationseinheit des Mobilfunkendgeräts enthalten ist. Das Mobilfunkendgerät ist zudem dazu eingerichtet, das Ergebnis der kryptographischen Operation über die Kommunikationsschnittstelle an das Nutzerendgerät zu übertragen, so dass das Nutzerendgerät mittels des Mobilfunkendgeräts in die Lage versetzt wird die kryptographische Operation mit den Daten durchzuführen, die in dem Nutzerendgerät verwendet werden.

Gemäß einem weiteren Aspekt der Erfindung wird ein Verfahren zum Ausführen einer kryptographischen Operation mit Daten vorgeschlagen, die in einem Nutzerendgerät verwendet werden. Das Verfahren umfasst die folgenden Schritte:
- Herstellen einer temporären Verbindung zwischen dem Nutzerendgerät und einem separaten Mobilfunkendgerät über eine Kommunikationsschnittstelle des Mobilfunkendgeräts,
- Übermitteln der Daten von dem Nutzerendgerät über die hergestellte Verbindung,
- Übergeben der Daten an eine Kryptoeinheit des Mobilfunkendgeräts, wobei die Kryptoeinheit in einer Teilnehmeridentifikationseinheit des Mobilfunkendgeräts enthalten ist,
- Ausführen der kryptographischen Operation für das Nutzerendgerät mit den Daten in der Kryptoeinheit und
- Übergeben des Ergebnisses der Operation von dem Mobilfunkendgerät an das Nutzerendgerät über die Verbindung, so dass das Nutzerendgerät mittels des Mobilfunkendgeräts in die Lage versetzt wird, die kryptographische Operation mit den Daten durchzuführen, die in dem Nutzerendgerät verwendet werden.

Das vorgeschlagene Mobilfunkendgerät und das Verfahren ermöglichen, kryptographische Operationen mit Daten, die in dem Nutzerendgerät vorliegen, in einer Kryptoeinheit der Teilnehmeridentifikationseinheit des Mobilfunkendgeräts durchzuführen. Hierzu werden die Daten über eine Kommunikationsverbindung von dem Nutzerendgerät an das Mobilfunkendgerät übergeben. Die Ergebnisse der Durchführung der kryptographischen Operation können über die Verbindung an das Nutzerendgerät zurückgegeben werden.

Bei dem Nutzerendgerät handelt es sich um ein separates Gerät. Dies bedeutet, dass die Geräte räumlich getrennt und zumindest bei nicht bestehender Verbindung grundsätzlich ohne weiteres weit voneinander entfernt werden können. Zwischen den Geräten wird eine temporäre Verbindung hergestellt. Dies bedeutet, dass die Verbindung im Allgemeinen nicht dauerhaft zu bestehen braucht. Insbesondere kann die Verbindung lediglich zur Durchführung der kryptographischen Operation aufgebaut und spätestens nach Erhalt des Ergebnisses der kryptographischen Operation in dem Nutzerendgerät wieder abgebaut werden.

Kryptographische Operationen können im Rahmen der Erfindung einheitlich in der Kryptoeinheit des Mobilfunkendgeräts vorgenommen werden. Insbesondere ist es damit nicht erforderlich, kryptographische Schlüssel (auch) in dem Nutzerendgerät zu installieren. Die Kryptoeinheit enthält unter anderem die kryptographischen Schlüssel zur Durchführung der kryptographischen Informationen. Darüber hinaus stellt die Kryptoeinheit Algorithmen zur Durchführung der kryptographischen Operation bereit.

Die kryptographische Operation, die in der Kryptoeinheit ausgeführt werden, können insbesondere wenigstens eine Aktion beinhalten aus der Gruppe umfassend eine Verschlüsselung der Daten, eine Entschlüsselung der Daten und die Erzeugung einer digitalen Signatur. Eine kryptographische Operation kann auch mehrere Aktionen beinhalten, beispielsweise eine Verschlüsselung und die Erstellung einer digitalen Signatur für dieselben Daten. Das Ergebnis einer kryptographischen Operation umfasst im Falle einer Verschlüsselung die verschlüsselten Daten, im Falle einer Entschlüsselung die entschlüsselten Daten, d.h. die Daten im Klartext, und im Falle der Erstellung einer digitalen Signatur umfasst das Ergebnis die digitale Signatur.

Die Kommunikationsschnittstelle des Mobilfunkendgeräts, über welche die Verbindung mit dem Nutzerendgerät hergestellt wird, ist in einer Ausgestaltung des Mobilfunkendgeräts und des Verfahrens eine Schnittstelle für eine Nahbereichskommunikation. Insbesondere kann es sich um eine NFC-Schnittstelle handeln. Unter einer Nahbereichskommunikation wird eine Kommunikation mit einer geringen Reichweite von beispielsweise einigen Zentimetern oder einigen zehn Zentimetern verstanden. Die Verwendung einer Nahbereichskommunikation verbessert die Absicherung gegen unberechtigte Zugriffe auf die Kryptoeinheit. Insbesondere wird verhindert, dass sich unberechtigte Dritte aus einer größeren Entfernung mit dem Mobilfunkendgerät verbinden, um auf die Kryptoeinheit zuzugreifen, ohne dass der Nutzer des Mobilfunkendgeräts dies bemerkt.

In einer Ausgestaltung des Mobilfunkendgeräts und des Verfahrens umfasst das Mobilfunkendgerät eine der Kryptoeinheit zugeordnete Verbindungseinheit, die dazu ausgestaltet ist, die mittels der Kommunikationsschnittstelle empfangenen Daten entgegenzunehmen und zur Durchführung der kryptographischen Operation an die Kryptoeinheit zu übergeben. In einer weiteren Ausgestaltung des Mobilfunkendgeräts und des Verfahrens ist die Verbindungseinheit weiterhin dazu ausgestaltet, das Ergebnis der kryptographischen Operation von der Kryptoeinheit zu empfangen und über die Kommunikationsschnittstelle an das Nutzerendgerät zu übermitteln. In diesen Ausgestaltungen greift die Kryptoeinheit nicht direkt auf die Funktionen der Kommunikationsschnittstelle des Mobilfunkendgeräts zu, sondern über eine Verbindungseinheit. Hierdurch brauchen die Kryptoeinheit und die Kommunikationsschnittstelle nicht aneinander angepasst zu werden. Stattdessen kann insbesondere eine allgemeine Kommunikationsschnittstelle eingesetzt werden und die Kommunikation mit der Kryptoeinheit mittels der Verbindungseinheit gleichzeitig auf eine spezifische, an die Kryptoeinheit und ihre Funktionen angepasste und gesicherte Weise durchgeführt werden.

Die Verbindungseinheit ist in einer Ausgestaltung des Mobilfunkendgeräts und des Verfahrens ebenso wie die Kryptoeinheit in der Teilnehmeridentifikationseinheit des Mobilfunkendgeräts enthalten. Die Teilnehmeridentifikationseinheit stellt zudem vorzugsweise Daten und Prozesse zur Identifizierung und/oder Authentifizierung eines Teilnehmers in einem Mobilfunknetz bereit. Weiterhin verfügt die Teilnehmeridentifikationseinheit vorzugsweise über eine spezielle Sicherheitsarchitektur, um diese Daten und Prozesse vor unberechtigten Zugriffen zu schützen. Die Kryptoeinheit und in der zuvor genannten Ausgestaltung des Mobilfunkendgeräts und des Verfahrens ebenfalls die Verbindungseinheit sind vorteilhaft in diese Sicherheitsarchitektur integriert. In einer Ausführungsform des Mobilfunkendgeräts und des Verfahrens ist die Teilnehmeridentifikationseinheit als eine Chipkarte ausgestaltet, die lösbar in das Mobilfunkendgerät eingesetzt ist.

Eine weitere Ausführungsform der Erfindung beinhaltet, dass die Teilnehmeridentifikationseinheit eine mit ersten Zugriffsrechten versehene erste Partition und eine mit zweiten Zugriffsrechten versehene zweite Partition umfasst, wobei die zweite Partition zur Speicherung von Applikationen, die der Kommunikationsschnittstelle zugeordnet sind, vorgesehen ist und wobei die Kryptoeinheit in der ersten und die Verbindungseinheit in der zweiten Partition enthalten ist. Hierdurch wird zum einen erreicht, dass für die Kryptoeinheit die ersten Zugriffsrechte gelten, die sich von den zweiten Zugriffsrechten unterscheiden. Damit können für die Kryptoeinheit andere Zugriffsrechte vorgesehen werden als für die anderen der Kommunikationsschnittstelle zugeordneten Applikationen. Hierdurch kann die Sicherheit der Kryptoeinheit erhöht werden. Die erste Partition kann ebenfalls die Daten und Prozesse zur Teilnehmeridentifizierung und/oder - authentisierung enthalten, so dass die Kryptoeinheit mit den gleichen Zugriffsrechen versehen werden kann. Die Verbindungseinheit ist hingegen vorteilhaft in der gleichen Partition untergebracht wie die übrigen auf die Kommunikationsschnittstelle zugreifenden Applikationen, so dass die Einrichtungen mit Zugriff auf die Kommunikationsschnittstelle einheitlich in einer Partition untergebracht sind. Hierdurch wird die Verwaltung dieser Einrichtungen vereinfacht.

Eine Weiterbildung des Mobilfunkendgeräts und des Verfahrens zeichnet sich dadurch aus, dass eine an die in der Kryptoeinheit ausführbaren kryptographischen Operationen angepasste Schnittstelle für eine Kommunikation zwischen der Kryptoeinheit und der Verbindungseinheit eingerichtet ist. Insbesondere kann in einer Ausgestaltung der Erfindung vorgesehen sein, dass Daten über die Schnittstelle zusammen mit einem Befehl aus einem Befehlssatz übermittelbar sind, wobei der Befehlssatz aus jeweils einem Befehl für die von der Kryptoeinheit unterstützten kryptographischen Operationen besteht. Die Kommunikationsschnittstelle kann im Gegensatz dazu, wie bereits erwähnt, eine allgemeine Schnittstelle für den Zugriff bereitstellen, welche nicht an die in der Kryptoeinheit ausführbaren kryptographischen Operationen angepasst ist. Durch die angepasste Schnittstelle zwischen der Verbindungseinheit und der Kryptoeinheit wird die Sicherheit gegenüber unberechtigten Zugriffen auf die Kryptoeinheit weiter erhöht. Insbesondere können bestimmte Operationen, wie beispielsweise das Auslesen von kryptographischen Schlüsseln, nicht über die Kommunikationsschnittstelle vorgenommen werden.

Darüber hinaus sieht eine Ausführungsform des Mobilfunkendgeräts und des Verfahrens vor, dass das Mobilfunkendgerät dazu ausgestaltet ist, eine Eingabe einer Authentisierungsinformation zu empfangen, wobei die Kryptoeinheit die kryptographische Operation nur nach erfolgreicher Prüfung des eingegebenen Authentisierungsmerkmals durchführt. Es kann vorgesehen sein, dass die Authentisierungsinformation als Reaktion auf eine Aufforderung eingegeben wird. Eine Ausgestaltung des Mobilfunkendgeräts und des Verfahrens sieht vor, dass die Aufforderung zur Eingabe der Authentisierungsinformation aufgrund des Empfangs der Daten der Kryptoeinheit mit dem Mobilfunkendgerät ausgebbar ist. Ein Vorteil dieser Ausgestaltung besteht darin, dass die Durchführung der kryptographischen Operation erst durch die Eingabe einer Authentisierungsinformation an dem Mobilfunkendgerät freigeschaltet wird. Hierdurch wird die Absicherung vor der Durchführung von kryptographischen Operationen durch unberechtigte Dritte weiter verbessert.

Ferner schlägt die Erfindung gemäß einem weiteren Aspekt ein System zum Ausführen einer kryptografischen Operation mit Daten vor. Das System ein Mobilfunkendgerät der beschrieben Art sowie das Nutzerendgerät.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden. Von den Figuren zeigt:
- Fig. 1: eine schematische Darstellung eines Systems mit einem Mobilfunkendgerät und einem Nutzerendgerät, in dem Daten vorhanden sind, mit denen in dem Mobilfunkendgerät kryptografische Operationen durchgeführt werden können,
- Fig. 2: eine schematische Darstellung einer in dem Mobilfunkendgerät verwendeten Teilnehmeridentifikationseinheit in einer Ausgestaltung mit zwei Partitionen und
- Fig. 3: eine schematische Veranschaulichung von Schritten, um in dem Mobilfunkendgerät eine kryptografische Operation mit Daten auszuführen, die in dem Nutzerendgerät verwendet werden.

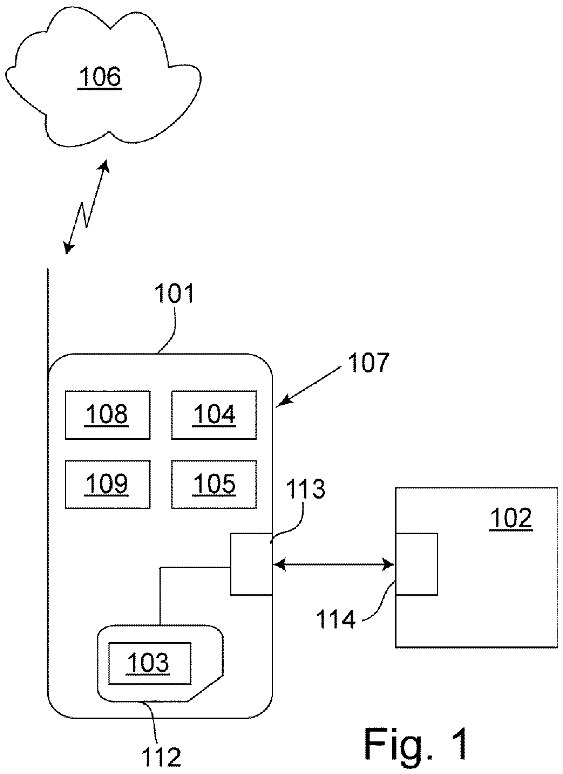

In dem Mobilfunkendgerät 101, das in der Figur 1 veranschaulicht ist, ist eine Kryptoeinheit 103 zur Durchführung von kryptographischen Operationen mit Daten enthalten, die in dem Mobilfunkendgerät 101 oder in einem ebenfalls in der Figur 1 gezeigten Nutzerendgerät 102 verwendet werden. Grundsätzlich können in der Kryptoeinheit 103 jegliche, dem Fachmann an sich bekannte kryptografische Operationen ausgeführt werden. Die kryptographischen Operationen umfassen insbesondere die Ver- und Entschlüsselung von Daten sowie die Erstellung von digitalen Signaturen.

Das Nutzerendgerät 102 ist ein elektronisches Gerät zur Datenverarbeitung und kann beispielsweise als PC (Personal Computer), Notebookcomputer oder dergleichen ausgestaltet sein. Das Mobilfunkendgerät 101 verfügt über eine Prozessoreinheit 104 zur Ausführung von Programmen und eine Speichereinheit 105 zum Speichern von Programmen und Nutzdaten. Gegenstand von kryptographischen Operationen, die in der Kryptoeinheit 103 durchgeführt werden, können jegliche Daten sein, die von Programmen, welche in dem Nutzerendgerät 102 ausgeführt werden, verarbeitet werden. Beispiele sind Programme für das Empfangen und Senden von elektronische Nachrichten, wie etwa E-Mails. So können Daten, die mit einem solchen Programm über eine Datenverbindung des Nutzerendgeräts 102 versendet werden sollen, mittels der Kryptoeinheit 103 verschlüsselt und/oder digital signiert werden, und verschlüsselte Daten, die über eine Datenverbindung in dem Nutzerendgerät 102 empfangen werden, können in der Kryptoeinheit 103 entschlüsselt werden. Gleichfalls kann beispielsweise vorgesehen sein, Nutzdaten in der Speichereinheit 105 in verschlüsselter Form zu speichern und die Verschlüsselung in der Kryptoeinheit 103 durchzuführen. Beim Auslesen können die Daten in der Kryptoeinheit 103 vor ihrer Verwendung in dem Nutzerendgerät 102 oder in einem anderen Gerät gegebenenfalls wieder von der Kryptoeinheit 103 entschlüsselt werden. Über diese Beispiele hinaus können in der Kryptoeinheit 103 kryptographische Operationen auch mit Nutzdaten durchgeführt werden, die in anderer Wiese in dem Nutzerendgerät 102 verwendet werden.

Das Mobilfunkendgerät 101 des Nutzers kann ein Mobiltelefon, ein Smartphon, ein Tablet- oder Notebookcomputer oder dergleichen sein und ist dazu ausgestaltet, sich über ein in der Figur nicht dargestelltes Zugangsnetz drahtlos mit einem Mobilfunknetz 106 zu verbinden, um von dem Mobilfunknetz 106 bereitgestellte Mobilfunkdienste, wie beispielsweise Dienste zur Sprach-, Daten- und Nachrichtenübermittlung zu nutzen. Beispielhaft ist in der Figur 1 lediglich ein einziges Mobilfunknetz 106 dargestellt, im Allgemeinen ist das Mobilfunkendgerät 101 jedoch dazu in der Lage, sich mit einer Vielzahl verschiedener Mobilfunknetze 106 zu verbinden.

In der gezeigten Ausgestaltung umfasst das Mobilfunkendgerät 101 ein Terminal 107, das ein Funkmodul 108 aufweist, mit dem das Mobilfunkendgerät 101 über mit einem Mobilfunknetz 106 über ein zugehöriges Funkzugangsnetz verbunden werden kann. Das Funkmodul 108 verfügt hierzu über die erforderliche Funktechnik, beispielsweise eine Antenne mit zugehörigen Peripheriekomponenten. Neben dem Funkmodul 108 beinhaltet das Terminal 107 eine Benutzerschnittstelle 109, die Einrichtungen zur Interaktion zwischen dem Mobilfunkendgerät 101 und einem Anwender umfasst. Insbesondere kann die Benutzerschnittstelle 109 eine als Display ausgestaltete visuelle Ausgabeeinrichtung sowie eine oder mehrere Eingabeeinrichtungen, wie beispielsweise eine Tastatur und/oder einen Joystick, umfassen. Das Display kann auch als ein so genannter Touchscreen ausgestaltet sein und damit gleichzeitig als visuelle Ausgabeeinrichtung und als Eingabeeinrichtung dienen. Zudem kann die Benutzerschnittstelle 109 weitere Ein-und Ausgabemittel bereitstellen, etwa für die Ein- oder Ausgabe von Audiosignalen. Das Terminal 107 umfasst weiterhin eine Prozessoreinheit 104 mit einem oder mehreren Prozessoren zur Steuerung des Terminals 107 und zur Ausführung von weiteren Programmen, eine Speichereinrichtung 105 zur Speicherung von Programmen und von Nutzdaten der Programme, und gegebenenfalls weitere Hard-und Softwarekomponenten zur Ausführung von in dem Terminal 107 implementierter Funktionen auf.

Das Mobilfunkendgerät 101 verfügt ferner über eine Identifizierungseinheit 112, welche Daten und Prozesse bereitstellt, die für den Zugriff des Mobilfunkendgeräts 101 auf ein Mobilfunknetz 106 benötigt werden. Unter anderem werden von der Identifizierungseinheit 112 bereitgestellte Daten und Prozesse für die Teilnehmeridentifizierung und -authentisierung in einem Mobilfunknetz 106 herangezogen. Die Teilnehmeridentifizierung und -authentisierung wird üblicherweise bei der Einbuchung in ein Mobilfunknetz 106 vorgenommen und umfasst die Identifizierung der Identifizierungseinheit 112 anhand einer Kennung, die von der Identifizierungseinheit 112 an das Mobilfunknetz 106 gesendet wird, sowie die Authentisierung der Identifizierungseinheit 112 unter Einsatz von Informationen, die in der Identifizierungseinheit 112 gespeichert sind und von kryptografischen Algorithmen, die in der Identifizierungseinheit 112 ausgeführt werden. Die Identifizierungseinheit 112 verfügt über eine spezielle Sicherheitsarchitektur, die einen unautorisierten Zugriff auf Daten und Prozesse, insbesondere die zuvor genannten, für den Zugriff auf ein Mobilfunknetz 106 verwendeten Daten und Prozesse, verhindert.

Bei der Identifizierungseinheit 112 handelt es sich in einer Ausgestaltung um eine gesicherte Chipkarte, die lösbar in einen in den Figuren nicht gezeigten Kartenleser des Terminals 107 des Mobilfunkendgeräts 101 eingesetzt werden kann. In dieser Ausgestaltung kann es sich bei der Identifizierungseinheit 112 um eine SIM-Karte oder eine UICC mit einer USIM-Anwendung handeln, die für den Zugriff auf ein Mobilfunknetz 106 verwendet wird, das beispielsweise als GSM-, UMTS- oder LTE (Long Term Evolution)-Netz ausgestaltet sein kann. Gleichfalls kann die Identifizierungseinheit 112 jedoch auch ein Chip sein, der fest in das Mobilfunkendgerät 101 integriert ist. Der Chip kann bei Verwendung des Mobilfunkendgeräts 101 in einem der zuvor genannten Netze als SIM- oder USIM-Chip ausgestaltet sein. In einer weiteren Ausführungsform ist die Identifizierungseinheit 112 ein speziell gesichertes Softwaremodul, das in der Prozessoreinheit 110 des Terminals 107 ausgeführt wird, die auch für andere Aufgaben vorgesehen ist.

Die Identifizierungseinheit 112 ist in einem Mobilfunknetz 106 registriert, das auch als das Heimatnetz der Identifizierungseinheit 112 bzw. des Nutzers des Mobilfunkendgeräts 101 bezeichnet wird und in dem der Identifizierungseinheit 112 zugeordneten Informationen gespeichert sind, die bei der Teilnehmeridentifizierung und -authentisierung herangezogen werden. Andere Mobilfunknetze 106 erhalten die für die Teilnehmeridentifizierung und -authentisierung erforderlichen Informationen bei einem Zugriff mittels der Identifizierungseinheit 112 von dem Heimatnetz. Von dem Betreiber des Heimatnetzes oder in dessen Auftrag wird die Identifizierungseinheit 112 in der Regel an den Nutzer ausgegeben und zuvor in einem sicheren Prozess vorkonfiguriert. Hierbei werden von dem Betreiber des Heimatnetzes vorgegebene Daten für die Teilnehmeridentifizierung und - authentisierung, von dem Betreiber vorgegebene Prozesse, wie beispielsweise bei der Authentisierung eingesetzte Verschlüsselungsalgorithmen, und weitere von dem Betreiber vorgegebene Daten, wie etwa Parameter für den Betrieb des Mobilfunkendgeräts 101 in einem Mobilfunknetz 106, in der Identifizierungseinheit 112 installiert.

Die für die Teilnehmeridentifizierung und -authentisierung und die entsprechenden Prozesse und ggf. auch einige oder alle Parameter für den Betrieb in einem Mobilfunknetz 106 sind in der Identifizierungseinheit 112 in geschützter Form gespeichert. Nach der Ausgabe der Identifizierungseinheit kann drahtlos per Fernzugriff, der als so genannter OTA (Over-the-Air)-Mechanismus ausgestaltet sein kann, oder ggf. über einen drahtgebundenen Zugriff auf die Identifizierungseinheit 112 zugegriffen werden, um geschützte Daten und Prozesse zu ergänzen oder enthaltene Daten und Prozesse zu löschen oder anzupassen. Der Zugriff auf geschützte Daten und Prozesse erfordert eine spezielle Berechtigung. Vorzugsweise wird der Zugriff vorzugsweise durch einen kryptographischen Mechanismus abgesichert und erfordert die Kenntnis kryptografischer Schlüssel, die bei einem Zugriff in der Identifizierungseinheit 112 geprüft werden. Dabei kann vorgesehen sein, dass für den Zugriff auf die zuvor beschriebenen Informationen zur Teilnehmeridentifizierung und -authentisierung diese Schlüssel nur dem Betreiber des Heimatnetzes bekannt sind, so dass die Zugriffsberechtigung auf den Heimatnetzbetreiber beschränkt ist.

Neben den geschützten Daten und Prozesse kann die Identifizierungseinheit 112 auch ungeschützte Daten und Prozesse enthalten, auf die ohne spezielle Zugangsberechtigung zugegriffen werden kann. Hierbei kann es sich beispielsweise um Daten des Nutzers des Mobilfunkendgeräts 101 handeln, die dieser in der Identifizierungseinheit 112 speichert.

Gleichfalls ist in der Identifizierungseinheit 112 die Kryptoeinheit 103 enthalten. In einer Ausgestaltung ist die Kryptoeinheit 103 als ein Softwareprogramm ausgestaltet, welches in der Identifizierungseinheit 112 ausgeführt wird. Die Kryptoeinheit 103 enthält kryptografische Algorithmen zur Durchführung der von der Kryptoeinheit 103 unterstützten kryptografischen Operationen. Ferner enthält die Kryptoeinheit 103 Schlüssel, die bei der Durchführung von kryptografischen Operationen in der Kryptoeinheit 103 verwendet werden. Bei den Schlüsseln handelt es sich um einen oder mehrere geheime kryptographische Schlüssel des Nutzers des Mobilfunkendgeräts 101, die Bestandteile eines oder mehrerer symmetrischer und/oder asymmetrischer Kryptosysteme sein können.

Die Kryptoeinheit 103 kann bereits bei der Vorkonfiguration in der Identifizierungseinheit 112 eingerichtet werden. Hierbei können kryptographische Algorithmen, die zur Durchführung von kryptographischen Operationen verwendet werden, in der Identifizierungseinheit 112 hinterlegt werden. Ebenso können die kryptographischen Schlüssel zumindest teilweise bei der Vorkonfiguration in der Identifizierungseinheit 112 gespeichert werden. Nach der Ausgabe der Identifizierungseinheit 112 können die enthaltenen kryptographischen Prozesse und Schlüssel vorzugsweise verändert oder gelöscht werden und weitere Prozesse und/oder Schlüssel ergänzt werden. Wie weiter unten noch genauer erläutert wird, kann dies in einer Ausgestaltung von dem Heimatnetzbetreiber per Fernzugriff oder in anderer Weise vorgenommen werden. Gleichfalls kann die Kryptoeinheit 103 dem Nutzer des Mobilfunkendgeräts 101 die Möglichkeit bieten, kryptographische Schlüssel an dem Mobilfunkendgerät 101 einzugeben, welche nach der Eingabe in der Identifizierungseinheit 112 gespeichert und von der Kryptoeinheit 103 zur Durchführung von kryptographischen Operationen verwendet werden können.

Hierdurch kann der Nutzer selbst kryptographische Schlüssel ergänzen, die er beispielsweise erst nach der Ausgabe der Identifizierungseinheit 112 in Benutzung nimmt, und er kann nicht mehr benutzte kryptographische Schlüssel aus der Identifizierungseinheit 112 entfernen. Zudem kann vorgesehen sein, dass durch entsprechende Nutzereingaben an dem Mobilfunkendgerät 101 auch kryptographische Prozesse der Kryptoeinheit 103 geändert, gelöscht und/oder ergänzt werden können.

Die Funktionen der Kryptoeinheit 103 können von Programmen genutzt werden, die in dem Mobilfunkendgerät 101 ausgeführt werden. Diese Programme können Daten, mit denen kryptographische Operationen durchgeführt werden sollen, über eine interne Schnittstelle des Mobilfunkendgeräts 101 bzw. der Identifizierungseinheit 112 an die Kryptoeinheit 103 übermitteln und erhalten das Ergebnis der kryptographischen Operation über die interne Schnittstelle zurück. Wenn beispielsweise ein in dem Mobilfunkendgerät 101 ausgeführtes Programm über Daten verfügt, die in der Kryptoeinheit 103 verschlüsselt werden sollen, so werden diese Daten über die interne Schnittstelle zusammen mit einer Aufforderung zur Verschlüsselung an die Kryptoeinheit 103 übergeben. Die Kryptoeinheit 103 führt die angeforderte Verschlüsselung aus und gibt als Ergebnis die verschlüsselten Daten über die Schnittstelle an das anfordernde Programm zurück. In ähnlicher Weise können in einem Programm vorliegende Daten, die in der Kryptoeinheit 103 entschlüsselt werden sollen, über die interne Schnittstelle zusammen mit einer Aufforderung zum Entschlüsseln an die Kryptoeinheit 103 übergeben werden. Diese führt die Entschlüsselung durch und gibt als Ergebnis die entschlüsselten Daten über die interne Schnittstelle an das anfordernde Programm zurück. Zur Erstellung einer digitalen Signatur kann ein in dem Mobilfunkendgerät 101 ausgeführtes Programm die zu signierenden Daten zusammen mit einer Aufforderung zur Erstellung einer digitalen Signatur an die Kryptoeinheit 103 übergeben, die daraufhin die digitale Signatur erstellt. Diese wird als Ergebnis über die interne Schnittstelle an das Programm zurückgegeben. Falls in der Kryptoeinheit 103 mehrere kryptographische Schlüssel des Nutzers vorliegen, kann in der Aufforderung zum Ver- oder Entschlüsseln bzw. zur Erstellung einer digitalen Signatur angegeben werden, welcher Schlüssel jeweils verwendet werden soll.

Neben Daten, die in Programmen vorliegen, die in dem Mobilfunkengerät 101 ausgeführt werden, kann die Kryptoeinheit 103 ebenfalls kryptographische Operationen mit Daten ausführen, die in dem Nutzerendgerät 102 vorliegen. Um die Daten von dem Nutzerendgerät 102 an die Kryptoeinheit 103 übermitteln und die Ergebnisse der kryptographischen Operationen an das Nutzerendgerät 102 zurückgeben zu können, wird zwischen dem Mobilfunkendgerät 101 und dem Nutzerendgerät 102 eine Kommunikationsverbindung aufgebaut.

Vorzugsweise handelt es sich hierbei um eine drahtlose Kommunikationsverbindung, insbesondere eine Verbindung zur drahtlosen Nahbereichskommunikation. Die Nutzung einer drahtlosen Kommunikationsverbindung hat den Vorteil, dass die Verbindung von dem Nutzer in einfacher Weise ohne zusätzliche Hilfsmittel, wie beispielsweise Kabel oder dergleichen, hergestellt werden kann. Unter einer Nahbereichskommunikationsverbindung wird eine Verbindung verstanden, die nur über einer begrenzten Distanz von beispielsweise einigen Zentimetern oder einigen zehn Zentimetern zwischen dem Mobilfunkendgerät 101 und dem Nutzerendgerät 102 aufgebaut werden kann. Bei Nutzung einer derartigen Verbindung wird verhindert, dass sich Geräte, die sich in größerer Distanz von dem Mobilfunkendgerät 101 befinden, in missbräuchlicher Absicht mit dem Mobilfunkendgerät 101 verbinden können, ohne dass dessen Nutzer dies bemerkt. Hierdurch wird die Absicherung gegen unberechtigte Zugriffe auf die Kryptoeinheit 103 verbessert. In einer Ausgestaltung wird zwischen dem Mobilfunkendgerät 101 und dem Nutzerendgerät 102 eine Kommunikationsverbindung herstellt, die auf wenigstens einer der Spezifikationen ISO14443 Typ A, ISO14443 Typ B, ISO18902 und ISO15693 basiert. Insbesondere kann es sich um eine NFC (Near Field Communication)-Verbindung handeln, die eine Kommunikation über eine geringe Reichweite von etwa 10-30 Zentimetern ermöglicht. Gleichfalls können auch andere Technologien zur Nahbereichskommunikation eingesetzt werden.

Alternativ zur Verwendung einer drahtlosen Nahbereichskommunikationsverbindung kann allerdings grundsätzlich auch eine drahtlose Kommunikationsverbindungen mit größerer Reichweite, wie beispielsweise eine Bluetooth-Verbindung, hergestellt werden. Alternativ kann anstelle einer drahtlosen Funkverbindung auch eine optische Verbindung, wie beispielsweise eine Infrarot-Verbindung, hergestellt werden. Ferner ist es grundsätzlich gleichfalls möglich, anstelle einer drahtlosen Verbindung auf eine drahtgebundene Verbindung zurückzugreifen. Diese kann beispielsweise als ein USB (Universal Serial Bus)-Verbindung ausgeführt sein.

Um die Kommunikationsverbindung herzustellen verfügen das Mobilfunkendgerät 101 und das Nutzerendgerät 102 jeweils über eine Kommunikationsschnittstelle 113, 114, die gemäß der vorgesehenen Kommunikationstechnologie ausgestaltet ist. Im Falle einer vorgesehenen Funkverbindung zwischen dem Mobilfunkendgerät 101 und dem Nutzerendgerät 102 enthalten die Kommunikationsschnittstellen 113, 114 jeweils eine Antenne und einen mit der Antenne verbundene Controller, in dem die spezifischen Protokolle der verwendeten Kommunikationstechnologie implementiert sind. Falls zwischen dem Mobilfunkendgerät 101 und dem Nutzerendgerät 102 eine NFC-Verbindung hergestellt wird, arbeiten die Antennen der Kommunikationsschnittstellen 113, 114 jeweils mit einer Trägerfrequenz von 13,56 MHz und die Controller arbeiten entsprechend den NFC-Spezifikationen.

In dem Mobilfunkendgerät 101 ist die Kommunikationsschnittstelle 113 ebenfalls für andere Nutzungen als den Austausch von Daten, mit denen kryptografische Operationen in der Kryptoeinheit 103 durchgeführt werden sollen, vorgesehen. Bei Verwendung einer NFC-Schnittstelle oder einen anderen Schnittstelle zur Nahbereichskommunikation, von der im Folgenden ausgegangen wird, können über die Kommunikationsschnittstelle 113 auch so genannte kontaktlose Transaktionen mit entsprechenden Gegenstellen in einer grundsätzlich bekannten Art und Weise durchgeführt werden. Die Transaktionen können unter anderem Zahlungstransaktionen und sogenannte Mobile-Ticketing-Transaktionen umfassen. Hierbei wird das Mobilfunkendgerät 101 von dem Nutzer in die Reichweite eines Zahlungs- oder Ticketing-Terminals gebracht, um eine Zahlung durchzuführen oder ein mobiles Ticket prüfen zu lassen.

Zur Durchführung von derartigen Transaktionen sind in dem Mobilfunkendgerät 101 entsprechende Programme 206 enthalten, die in der Regel von Drittanbietern, etwa von Zahlungsanbietern oder von Mobile-Ticketing Anbietern, bereitgestellt werden und im Folgenden auch als Transaktionsprogramme 206 bezeichnet werden. Da die Durchführung der Transkationen sensible Daten und Prozesse erfordert, die von den Transaktionsprogrammen 206 verwaltet werden, sind die Transaktionsprogramme 206 in dem Mobilfunkendgerät 101 speziell gegen unberechtigte Zugriffe gesichert. Hierfür ist in einer Ausgestaltung zur Speicherung und Ausführung der Transaktionsprogramme die Identifizierungseinheit 112 vorgesehen. In der Identifizierungseinheit sind die Transaktionsprogramme 206 vorzugsweise in geschützter Form gespeichert, so dass die Transaktionsprogramme 206 und von ihnen verwendete geschützte Parameter nur mit einer speziellen Zugriffsberechtigung installiert, gelöscht und angepasst werden können.

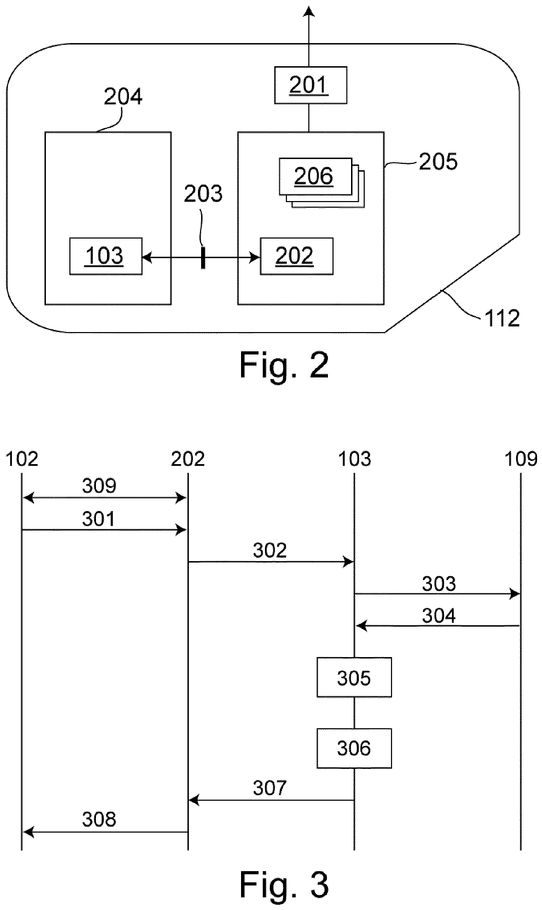

In der Figur 2 ist die Identifizierungseinheit 112 des Mobilfunkendgeräts 101 schematisch in einer Ausgestaltung gezeigt, in der Transaktionsprogramme 206 in der Identifizierungseinheit 112 enthalten sind. Die dargestellte Identifizierungseinheit 112 verfügt über eine Steuerungseinheit 201, über die Zugriffe von Transaktionsprogrammen 206, die in der Identifizierungseinheit 112 ausgeführt werden, auf die Kommunikationsschnittstelle 113 abgewickelt werden. Die Steuerungseinheit 201 verwaltet die Zugriffe von Transaktionsprogrammen 206 auf die Kommunikationsschnittstelle 113 nach vorgegebenen Regeln. Diese Regeln können insbesondere etwa vorsehen, dass jeweils lediglich ein einziges Transaktionsprogramm 206 die Kommunikationsschnittstelle 113 nutzen kann. Hierdurch können Konflikte zwischen den Transaktionsprogrammen 206 vermieden werden. Ferner kann vermieden werden, dass ein Transaktionsprogramm 206 auf Daten zugreifen kann, die ein anderes Transaktionsprogramm 206, welches gleichzeitig ausgeführt wird, über die Kommunikationsschnittstelle 113 mit einer Gegenstelle austauscht. Hierdurch wird die Sicherheit von kontaktlosen Transaktionen erhöht.

Die Steuerungseinheit 201 wird vorzugsweise von sämtlichen in der Identifizierungseinheit 112 vorhandenen Transaktionsprogrammen 206 verwendet. Die Steuerungseinheit 201 stellt hierfür allgemeine Funktionen zur Verfügung, welche es den Programmen gestattet, über die Kommunikationsschnittstelle 113 mit einer Gegenstelle zu kommunizieren, um kontaktlose Transaktionen auszuführen. Insbesondere ermöglicht die Steuerungseinheit 201 vorzugsweise den Austausch von Daten und Steuerbefehlen zwischen den Transaktionsprogrammen und den Gegenstellen. Um Transaktionen verschiedener Art durchzuführen, sind die übertragbaren Daten und Befehle vorzugsweise grundsätzlich nicht beschränkt.

Im Gegensatz zu den Transaktionsprogrammen 206 hat die Kryptoeinheit 103 keinen direkten Zugriff auf Kommunikationsschnittstelle 113 bzw. die ihr zugeordneten Steuerungseinheit 201. Stattdessen enthält die Identifizierungseinrichtung 112 eine Verbindungseinheit 202, über welche die Kryptoeinheit 103 an die Kommunikationsschnittstelle angebunden ist. Der Zugriff der Verbindungseinheit 202 auf die Kommunikationsschnittstelle 113 erfolgt, wie bei anderen Transaktionsprogrammen 206, über die Steuerungseinheit 201. Die Verbindungseinheit 202 verwendet hierbei die allgemeinen von der Steuerungseinheit 201 bereitgestellten Funktionen zur Durchführung von kontaktlosen Transaktionen über die Kommunikationsschnittstelle 113. Bei der Verbindungseinheit 202 handelt es sich in einer Ausgestaltung um ein in der Identifizierungseinheit 112 gespeichertes und ausgeführtes Programm.

Die Verbindungseinheit 202 ist dazu ausgestaltet, Daten entgegenzunehmen, die über die Kommunikationsschnittstelle 113 zur Durchführung von kryptographischen Operationen an das Mobilfunkendgerät 101 übergeben werden. Die Übergabe der Daten erfolgt vorzugsweise jeweils zusammen mit einer Anforderung einer kryptographischen Operation, die in der Kryptoeinheit 103 ausgeführt werden soll. Nach der Entgegennahme der Daten und der Anforderung leitet die Verbindungseinheit 202 die Daten an die Kryptoeinheit 103 zusammen mit einem Steuerbefehl zur Durchführung einer kryptographischen Operation, welche in der Anforderung angegeben ist, an die Kryptoeinheit 103 weiter. Ggf. kann die Anforderung einen bestimmten kryptografischen Schlüssel spezifizieren, der bei der Durchführung der kryptografischen Operation verwendet werden soll, wobei diese Spezifizierung bei der Übergabe der Daten von der Verbindungseinheit 202 an die Kryptoeinheit 103 in den Steuerbefehl übernommen wird. Nach der Ausführung der kryptografischen Operation wird das Ergebnis der kryptographischen Operation von der Kryptoeinheit 103 an die Verbindungseinheit 202 übergeben, welche das Ergebnis über die Kommunikationsschnittstelle 113 an das Nutzerendgerät 102 zurückgibt, das die durchführende kryptographische Operation zuvor angefordert hat.

Für den Datenaustausch zwischen der Verbindungseinheit 202 und der Kryptoeinheit 103 ist eine Schnittstelle 203 innerhalb der Identifizierungseinheit 112 vorgesehen. Für den Datenaustausch über die Schnittstelle 203 ist ein Protokoll eingerichtet, welches vorzugsweise an die von der Kryptoeinheit 103 unterstützten kryptografischen Operationen angepasst ist. Dabei ermöglicht das Protokoll in einer Ausgestaltung ausschließlich die Übergabe von Daten von der Steuereinheit 201 an die Kryptoeinheit 103 zusammen mit einem Befehl zur Durchführung einer kryptografischen Operation, der einem vorgegeben Befehlssatz entnommen ist. Der Befehlssatz besteht in dieser Ausgestaltung aus jeweils einem Befehl für jede kryptografische Operation, die in der Kryptoeinheit 103 ausgeführt werden kann. Weitere Befehle sind in dieser Ausgestaltung nicht vorgesehen. Der Empfang von Daten, die nicht zusammen mit einem Befehl aus dem vorgegebenen Befehlssatz an die Kryptoeinheit 103 übermittelt werden, wird von der Kryptoeinheit 103 abgelehnt. Hierdurch können missbräuchliche Zugriffe auf die Kryptoeinheit 103 vermieden werden. Insbesondere kann verhindert werden, dass kryptografische Schlüssel ausgelesen werden, da entsprechende Befehle von der Schnittstelle 203 nicht unterstützt werden.

Zur Verhinderung der Durchführung von kryptographischen Operationen in der Kryptoeinheit 103 durch unberechtigte Personen ist vorgesehen, dass die Kryptoeinheit 103 eine kryptographische Operation erst nach einer Nutzerauthentisierung durchführt. Vorzugsweise wird vor der Durchführung jeder einzelnen kryptographischen Operation eine Nutzerauthentisierung durchgeführt. Die Authentisierung wird durchgeführt, wenn eine kryptografische Operation mit Daten ausgeführt werden soll, welche über die Schnittstelle 103 an die Kryptoeinheit 103 übergeben werden. Gleichfalls kann vorgesehen sein, dass die Nutzerauthentisierung auch vorgenommen wird, um die Durchführung von kryptografischen Operationen mit Daten freizuschalten, die innerhalb des Mobilfunkendgeräts über die zuvor beschriebene interne Schnittstelle an die Kryptoeinheit übergeben werden. Es kann jedoch alternativ auch vorgesehen sein, bei Übergabe der Daten über die interne Schnittstelle auf die Nutzerauthentisierung zu verzichten, um den Komfort für den Nutzer zu erhöhen.

In einer Ausgestaltung ist vorgesehen, dass die Nutzerauthentisierung anhand von Authentisierungsinformationen erfolgt, die von dem Nutzer an dem Mobilfunkendgerät 101 über die Nutzerschnittstelle 109 eingegeben werden. Die Authentisierungsinformationen können beispielsweise eine persönliche Identifikationsnummer (PIN) oder ein Kennwort umfassen. Die PIN kann einer PIN entsprechen, welche üblicherweise für die Freischaltung des Zugriffs auf die Identifizierungseinheit 112 geprüft wird und in der Regel beim Einschalten des Mobilfunkendgeräts 101 vom Nutzer einzugeben ist. Die Eingabe des Authentisierungsmerkmals erfolgt vorzugsweise aufgrund einer Aufforderung, welche von der Kryptoeinheit 103 akustisch und/oder visuell an der Benutzerschnittstelle 109 des Mobilfunkendgeräts 101 ausgegeben wird. Die Ausgabe erfolgt dann, wenn in der Kryptoeinheit 103 Daten empfangen werden, mit denen eine kryptographische Operation durchgeführt werden soll.

Nach der Eingabe der Authentisierungsinformation prüft die Kryptoeinheit 103, ob die eingegebene Authentisierungsinformation korrekt ist und führt die kryptographische Operation nur nach erfolgreicher Prüfung durch. Kann die Authentisierungsinformation von der Kryptoeinheit 103 nicht erfolgreich geprüft werden, wird die Durchführung der kryptographischen Operation blockiert. Durch eine solche Absicherung wird verhindert, dass unberechtigte Dritte ein Nutzerendgerät 102 mit dem Mobilfunkendgerät 101 herstellen und eine kryptographische Operation mit der Kryptoeinheit 103 ausführen, ohne dass dies von dem Nutzer des Mobilfunkendgeräts 101 autorisiert wird.

Zusammen mit der Aufforderung zur Eingabe der Authentisierungsinformation oder alternativ hierzu kann der Nutzer des Mobilfunkendgeräts 101 zudem darüber informiert werden, welche kryptographische Operation in der Kryptoeinheit 103 durchgeführt werden soll. Ferner können vorhandene Informationen über die Daten, mit denen die kryptographische Operation ausgeführt werden soll, angezeigt werden.

Werden die Daten in Form einer Datei an die Kryptoeinheit 103 übergeben, kann beispielsweise die Beteiligung der Datei angegeben werden. Wird eine Nachricht, wie beispielsweise eine E-Mail, zur Durchführung einer kryptographischen Operation an die Kryptoeinheit 103 übergeben, so kann beispielsweise ein Betreff dieser Nachricht angezeigt werden. Insbesondere kann der Nutzer des Mobilfunkendgeräts 101 und des Nutzerendgeräts 102 auf diese Weise einfach erkennen, ob in der Kryptoeinheit 103 die korrekten Daten vorliegen und die korrekte kryptographische Operation durchgeführt wird. Bei Verzicht auf eine Nutzerauthentisierung kann vorgesehen sein, dass die kryptografische Operation nur dann durchgeführt wird, wenn der der Nutzer die angezeigten Informationen durch eine entsprechende Eingabe an der Benutzerschnittstelle 109 des Mobilfunkendgeräts 101 bestätigt. Bei vorgesehener Nutzerauthentisierung dient die Eingabe der Authentisierungsinformation durch den Benutzer gleichzeitig als Bestätigung.

In der Figur 2 ist eine Ausgestaltung der Identifizierungseinheit 112 veranschaulicht ist, in der Identifizierungseinheit 112 mehrere Partitionen 204, 205 beinhaltet. Ein Zugriff auf geschützte Daten und Prozesse in den Partitionen 204, 205 der Identifizierungseinheit 112 ist wie zuvor insbesondere bereits für die Daten und Prozesse zur Teilnehmeridentifizierung und -authentisierung beschrieben, nur für berechtigte Stellen zugelassen. Die Absicherung gegen unberechtigte Zugriffe wird durch kryptografische Mechanismen erreicht, wobei für Zugriffe kryptografische Schlüssel erforderlich sind, die in der Identifizierungseinheit 112 überprüft werden. Vorzugsweise sind die erste Partition 204 und die zweite Partition 205 mit unterschiedlichen Zugangsberechtigungen ausgestattet.

In einer ersten Partition 204 sind die Informationen zur Teilnehmeridentifizierung und -authentisierung und die weiteren Informationen, die für den Betrieb des Mobilfunkendgeräts 101 mit einem Mobilfunknetz 106 herangezogen werden, gespeichert. Eine Zugriffsberechtigung auf die erste Partition 204 besitzt vorzugsweise ausschließlich der Heimatnetzbetreiber des Identifizierungsmoduls 112. Die Kryptoeinheit 103 ist in der Ausgestaltung, die in der Figur 3 dargestellt ist, in der ersten Partition 204 enthalten. Hierdurch ist lediglich der Heimatnetzbetreiber ist dabei dazu in der Lage, Anpassungen der Kryptoeinheit 103 vorzunehmen und geheime Informationen, wie etwa von Kryptoeinheit 103 verwendete Schlüssel, auszulesen. Alternativ kann es jedoch auch vorgesehen sein, dass die Kryptoeinheit 103 in einer anderen Partition enthalten ist. Insbesondere kann vorgesehen sein, dass für die Kryptoeinheit 103 eine eigene Partition vorgesehen ist, die mit einer eigenen Zugriffsberechtigungen speziell für den Zugriff auf die Kryptoeinheit 103 versehen ist.

In einer von der ersten Partition 204 getrennten zweiten Partition 205 der Identifizierungseinheit 112 sind die Transaktionsprogramme 206 zur Durchführung von kontaktlosen Transaktionen gespeichert. Vorzugsweise ist in der zweiten Partition auch die Verbindungseinheit 202 enthalten. Hierdurch kann der Zugriff auf die Kommunikationsschnittstelle 113 bzw. die ihr zugeordnete Steuerungseinheit 201 der Identifizierungseinheit 112 auf Einrichtungen beschränkt werden, die in der zweiten Partition 205 enthalten sind. Dies vereinfacht die Verwaltung der Transaktionsprogramme 206 durch die Steuerungseinheit 201.

Die Zugriffsberechtigung auf die zweite Partition 205 mit den Transaktionsprogrammen 206 besitzt vorzugsweise zusätzlich zu dem Heimatnetzbetreiber oder alternativ zum Heimatnetzbetreiber eine weitere Stelle. Die weitere Stelle ist damit zusätzlich oder alternativ zu dem Heimatnetzbetreiber dazu in der Lage, Transaktionsprogramme in der Identifizierungseinheit 112 zu hinterlegen, zu löschen oder zu ändern. Hierdurch können Transaktionsprogramme 206 unabhängig von dem Heimatnetzbetreiber in der Identifizierungseinheit 112 hinterlegt und geändert werden. Die andere Stelle kann beispielsweise eine Agentur sein, welche die Hinterlegung von Transaktionsprogrammen 206 in den Identifizierungseinheiten 112 für Drittanbieter von Transaktionsprogrammen 206 bereitstellt. In einer weiteren Ausgestaltung kann auch vorgesehen sein, dass Dritte eine Zugriffsberechtigung auf die zweite Partition 205 erhalten und so eigene Transaktionsprogramme 206 in der Identifizierungseinheit 112 hinterlegen können.

Figur 3 zeigt in einer schematischen Darstellung ausgewählte Schritte zur Durchführung einer kryptographischen Operation in der Kryptoeinheit 103 des Mobilfunkendgeräts 101 mit Daten, die in dem Nutzerendgerät 102 vorhanden sind.

Zunächst wird in dem Schritt 309 über die Kommunikationsschnittstelle 113 des Mobilfunkendgeräts 101 und die entsprechende Kommunikationsschnittstelle 114 des Nutzerendgeräts 102 eine Kommunikationsverbindung zwischen dem Nutzerendgerät 102 und dem Mobilfunkendgerät 101 hergestellt. Wie zuvor erläutert, handelt es sich vorzugsweise um eine drahtlose Kommunikationsverbindung, insbesondere um eine Nahbereichskommunikationsverbindung, beispielsweise eine NFC-Verbindung. Innerhalb des Mobilfunkendgeräts 101 wird die Verbindung zu der Verbindungseinheit 202 hergestellt, die in der zuvor beschriebenen Ausgestaltung des Mobilfunkendgeräts 101 in der Identifizierungseinheit 112 enthalten ist.

Über die hergestellte Kommunikationsverbindung werden in dem Schritt 301 die Daten zusammen mit einer Anforderung zur Durchführung der gewünschten kryptographischen Operation von dem Nutzerendgerät 102 an die Verbindungseinheit 202 übermittelt. Die Anforderung entspricht einer der kryptographischen Operationen, die von der Kryptoeinheit 103 unterstützt werden, d.h. von der Kryptoeinheit 103 ausgeführt werden können. Die Anforderung hat vorzugsweise ein vorgegebenes Format, in dem insbesondere die durchzuführende kryptographische Operation in einer vorgegebenen Weise spezifiziert wird, so dass die Anforderung in der Verbindungseinheit 202 interpretiert werden kann. Ggf. kann die Anforderung auch einen bestimmten in der Kryptoeinheit 103 vorhanden kryptografischen Schlüssel spezifizieren, der zur Durchführung der kryptografischen Operation verwendet werden soll.

Wenn die Verbindungseinheit 202 feststellt, dass sich die Anforderung auf eine von der Kryptoeinheit 103 unterstützte kryptographische Operation bezieht, leitet die Verbindungseinheit 202 in dem Schritt 302 die empfangenen Daten zusammen mit einem Steuerbefehl zur Durchführung einer kryptographischen Operation zusammen mit einem der gewünschten kryptographischen Operation entsprechenden Steuerbefehl an die Kryptoeinheit 103 weiter. Wenn die Anforderung einen kryptografischen Schlüssel spezifiziert, wird dieser ebenfalls in dem Steuerbefehl angegeben.

Nachdem die Daten zusammen mit dem Steuerbefehl in der Kryptoeinheit 103 empfangen worden sind, fordert die Kryptoeinheit 103 den Nutzer des Mobilfunkendgeräts 101 in dem Schritt 303 zur Eingabe der Authentisierungsinformation auf, bei der es sich, wie zuvor beschrieben, um eine PIN handeln kann. Die Aufforderung wird an der Benutzerschnittstelle 109 des Mobilfunkendgeräts 101 angezeigt. Zusammen mit der Aufforderung zur Eingabe der Authentisierungsinformation oder alternativ kann der Nutzer des Mobilfunkendgeräts 101 zudem, wir zuvor beschrieben, über die durchzuführende kryptographische Operation und/oder eine Bezeichnung der Daten informiert werden. Wenn der Nutzer des Mobilfunkendgeräts 101 der Durchführung der kryptographischen Operation zustimmt, gibt er die Authentisierungsinformation oder, falls keine Nutzerauthentisierung vorgesehen ist, eine einfache Bestätigung an der Benutzerschnittstelle 109 des Mobilfunkendgeräts 101 ein. In dem Schritt 304 wird die eingegebene Authentisierungsinformation oder die Bestätigung an die Kryptoeinheit 103 übermittelt. Diese prüft ggf. in dem Schritt 305, ob die eingegebene Authentisierungsinformation korrekt ist. Ist dies der Fall, führt die Kryptoeinheit 103 in dem Schritt 306 die gewünschte kryptographische Operation mit den Daten durch. Sofern in dem Steuerbefehl ein kryptografischer Schlüssel spezifiziert wird, wird dieser zur Durchführung der kryptografischen Operation eingesetzt. Sofern in dem Schritt 305 festgestellt wird, dass nicht die korrekte Authentisierungsinformation angegeben worden ist, wird die Ausführung der kryptographischen Operation mit den Daten blockiert.

Nach Abschluss der kryptographischen Operation gibt die Kryptoeinheit 103 das Ergebnis der kryptographischen Operation in dem Schritt 307 an die Verbindungseinheit 202 zurück. Wenn es sich bei der kryptographischen Operation um eine Verschlüsselung der Daten handelt, enthält das Ergebnis die verschlüsselten Daten. Im Falle einer Entschlüsselung enthält das Ergebnis die entschlüsselten Daten, das heißt die Daten im Klartext. Wurde eine digitale Signatur erstellt, ist diese in dem an die Verbindungseinheit 202 übergebenen Ergebnis enthalten. Von der Verbindungseinheit 202 wird das erhaltene Ergebnis der kryptographischen Operation in dem Schritt 308 an das Nutzerendgerät 102 zurückgegeben, von dem die Daten in dem Schritt 301 zusammen mit der Anforderung zur Durchführung einer kryptographischen Operation erhalten worden sind.

Obwohl die Erfindung in den Zeichnungen und der vorausgegangenen Darstellung im Detail beschrieben wurde, sind die Darstellungen illustrativ und beispielhaft und nicht einschränkend zu verstehen. Die Erfindung wird durch die Patentansprüche definiert.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Mobilfunkendgerät (101) mit Prozessmitteln geeignet zum Ausführen einer kryptografischen Operation mit Daten, die in einem separaten Nutzerendgerät (102) verwendet werden, umfassend eine Kommunikationsschnittstelle (113) zum Herstellen einer temporären Verbindung mit dem Nutzerendgerät (102), wobei die Kommunikationsschnittstelle (113) eingerichtet ist, die Daten von dem Nutzerendgerät (102) zu empfangen, weiterhin umfassend eine Kryptoeinheit (103), die dazu ausgestaltet ist, die kryptografische Operation mit den über die Kommunikationsschnittstelle (113) empfangenen Daten für das Nutzerendgerät (102) auszuführen, wobei die Kryptoeinheit (103) in einer Teilnehmeridentifikationseinheit (112) des Mobilfunkendgeräts (101) enthalten ist, und das Mobilfunkendgerät (101) eingerichtet ist, das Ergebnis der kryptographischen Operation über die Kommunikationsschnittstelle (113) an das Nutzerendgerät (102) zu übertragen, so dass das Nutzerendgerät (102) mittels des Mobilfunkendgeräts (101) in die Lage versetzt wird die kryptographische Operation mit den Daten durchzuführen, die in dem Nutzerendgerät (102) verwendet werden.

2. Mobilfunkendgerät (101) nach Anspruch 1, umfassend eine der Kryptoeinheit (103) zugeordnete Verbindungseinheit (202), die dazu ausgestaltet ist, die mittels der Kommunikationsschnittstelle (113) empfangenen Daten entgegenzunehmen und zur Durchführung der kryptografischen Operation an die Kryptoeinheit (103) zu übergeben.

3. Mobilfunkendgerät (101) nach Anspruch 2, wobei die Verbindungseinheit (202) weiterhin dazu ausgestaltet ist, ein Ergebnis der kryptografischen Operation von der Kryptoeinheit (103) zu empfangen und über die Kommunikationsschnittstelle (113) an das Nutzerendgerät (102) zu übermitteln.

4. Mobilfunkendgerät (101) nach Anspruch 2, wobei die Verbindungseinheit (202) in der Teilnehmeridentifikationseinheit (112) des Mobilfunkendgeräts (101) enthalten ist.

5. Mobilfunkendgerät (101) nach einem der vorangegangenen Ansprüche 2 - 4, wobei die Teilnehmeridentifikationseinheit (112) eine mit ersten Zugriffsrechten versehene erste Partition (204) und eine mit zweiten Zugriffsrechten versehene zweite Partition umfasst, wobei die zweite Partition (205) zur Speicherung von Applikationen, die der Kommunikationsschnittstelle (113) zugeordnet sind, vorgesehen ist, und wobei die Kryptoeinheit (103) in der ersten und die Verbindungseinheit (202) in der zweiten Partition enthalten ist.

6. Mobilfunkendgerät (101) nach einem der vorangegangenen Ansprüche 2 - 5, wobei eine an die in der Kryptoeinheit (103) ausführbaren kryptografischen Operationen angepasste Schnittstelle (203) für eine Kommunikation zwischen der Kryptoeinheit (103) und der Verbindungseinheit (202) eingerichtet ist.

7. Mobilfunkendgerät (101) nach Anspruch 6, wobei Daten über die Schnittstelle (203) zusammen mit einem Befehl aus einem Befehlssatz übermittelbar sind und wobei der Befehlssatz aus jeweils einem Befehl für die von der Kryptoeinheit (103) unterstützten kryptografischen Operationen besteht.

8. Mobilfunkendgerät (101) nach einem der vorangegangenen Ansprüche, wobei das Mobilfunkendgerät (101) dazu ausgestaltet ist, eine Eingabe einer Authentisierungsinformation zu empfangen, und wobei die Kryptoeinheit (103) die kryptografische Operation nach erfolgreicher Prüfung des eingegebenen Authentisierungsmerkmals durchführt.

9. Mobilfunkendgerät (101) nach Anspruch 8, wobei eine Aufforderung zur Eingabe der Authentisierungsinformation aufgrund des Empfangs der Daten in der Kryptoeinheit (103) mit dem Mobilfunkendgerät (101) ausgegeben wird.

10. Mobilfunkendgerät (101) nach einem der vorangegangenen Ansprüche, wobei die kryptografische Operation wenigstens eine Aktion beinhaltet aus der Gruppe umfassend eine Verschlüsselung der Daten, eine Entschlüsselung der Daten und die Erzeugung einer digitalen Signatur.

11. Mobilfunkendgerät (101) nach einem der vorangegangenen Ansprüche, wobei die Kommunikationsschnittstelle (113) eine Schnittstelle für eine Nahbereichskommunikation ist.

12. Mobilfunkendgerät (101) nach einem der vorangegangenen Ansprüche, wobei die Teilnehmeridentifikationseinheit (112) als eine Chipkarte ausgestaltet ist, die lösbar in das Mobilfunkendgerät (101) eingesetzt ist.

13. System zum Ausführen einer kryptografischen Operation mit Daten, umfassend ein Mobilfunkendgerät (101) nach einem der vorangegangenen Ansprüche sowie das Nutzerendgerät (102).

14. Verfahren zum Ausführen einer kryptografischen Operation mit Daten, die in einem Nutzerendgerät (102) verwendet werden, wobei das Verfahren folgende Schritte umfasst:
- Herstellen einer temporären Verbindung zwischen dem Nutzerendgerät (102) und einem separaten Mobilfunkendgerät (101) über eine Kommunikationsschnittstelle (113) des Mobilfunkendgeräts (101),
- Übermitteln der Daten von dem Nutzerendgerät (102) über die hergestellte Verbindung,
- Übergeben der Daten an eine Kryptoeinheit (103) des Mobilfunkendgeräts (101), wobei die Kryptoeinheit (103) in einer Teilnehmeridentifikationseinheit (112) des Mobilfunkendgeräts (101) enthalten ist,
- Ausführen der kryptografischen Operation für das Nutzerendgerät (102) mit den Daten in der Kryptoeinheit (103) des Mobilfunkendgeräts (101) und
- Übergabe des Ergebnisses der kryptografischen Operation von dem Mobilfunkendgerät (101) an das Nutzerendgerät (102) über die Verbindung, so dass das Nutzerendgerät (102) mittels des Mobilfunkendgeräts (101) in die Lage versetzt wird, die kryptographische Operation mit den Daten durchzuführen, die in dem Nutzerendgerät (102) verwendet werden.

## Claims

1. Mobile terminal (101) with process means suitable for performing a cryptographic operation with data that is used in a separate user terminal (102), comprising a communication interface (113) for establishing a temporary connection to the user terminal (102), wherein the communication interface (113) is set up to receive the data from the user terminal (102), further comprising a cryptographic unit (103), which is configured to perform the cryptographic operation with the data received via the communication interface (113) for the user terminal (102), wherein the cryptographic unit (103) is contained in a subscriber identification unit (112) of the mobile terminal (101), and the mobile terminal (101) is set up to transmit the result of the cryptographic operation via the communication interface (113) to the user terminal (102), so that the user terminal (102) is enabled by means of the mobile terminal (101) to perform the cryptographic operation with the data that is used in the user terminal (102).

2. Mobile terminal (101) according to claim 1, comprising a connection unit (202), which is associated with the cryptographic unit (103) and is configured to accept the data received by means of the communication interface (113) and to transfer it to the cryptographic unit (103) for performing the cryptographic operation.

3. Mobile terminal (101) according to claim 2, wherein the connection unit (202) is further configured to receive a result of the cryptographic operation from the cryptographic unit (103) and to transmit it via the communication interface (113) to the user terminal (102).

4. Mobile terminal (101) according to claim 2, wherein the connection unit (202) is contained in the subscriber identification unit (112) of the mobile terminal (101).

5. Mobile terminal (101) according to any one of the preceding claims 2 - 4, wherein the subscriber identification unit (112) comprises a first partition (204) provided with first access rights and a second partition provided with second access rights, wherein the second partition (205) is provided for storing applications, which are associated with the communication interface (113), and wherein the cryptographic unit (103) is contained in the first and the connection unit (202) is contained in the second partition.

6. Mobile terminal (101) according to any one of the preceding claims 2 - 5, wherein an interface (203) adapted to the cryptographic operations executable in the cryptographic unit (103) is set up for communication between the cryptographic unit (103) and the connection unit (202).

7. Mobile terminal (101) according to claim 6, wherein data is transmissible via the interface (203) together with a command from a set of commands and wherein the set of commands consists of a respective command for the cryptographic operations supported by the cryptographic unit (103).

8. Mobile terminal (101) according to any one of the preceding claims, wherein the mobile terminal (101) is configured to receive an input of authentication information, and wherein the cryptographic unit (103) performs the cryptographic operation following successful verification of the input authentication feature.

9. Mobile terminal (101) according to claim 8, wherein a request for the input of the authentication information is output by the mobile terminal (101) due to the receipt of the data in the cryptographic unit (103).

10. Mobile terminal (101) according to any one of the preceding claims, wherein the cryptographic operation includes at least one action from the group comprising an encryption of the data, a decryption of the data and the generation of a digital signature.

11. Mobile terminal (101) according to any one of the preceding claims, wherein the communication interface (113) is an interface for short-range communication.

12. Mobile terminal (101) according to any one of the preceding claims, wherein the subscriber identification unit (112) is configured as a chip card, which is inserted detachably into the mobile terminal (101).

13. System for performing a cryptographic operation with data, comprising a mobile terminal (101) according to any one of the preceding claims and the user terminal (102).

14. Method for performing a cryptographic operation with data, which is used in a user terminal (102), wherein the method comprises the following steps:
- establishing a temporary connection between the user terminal (102) and a separate mobile terminal (101) via a communication interface (113) of the mobile terminal (101),
- transmission of data from the user terminal (102) via the connection established,
- transfer of the data to a cryptographic unit (103) of the mobile terminal (101), wherein the cryptographic unit (103) is contained in a subscriber identification unit (112) of the mobile terminal (101),
- execution of the cryptographic operation for the user terminal (102) with the data in the cryptographic unit (103) of the mobile terminal (101) and
- transfer of the result of the operation from the mobile terminal (101) to the user terminal (102) via the connection, so that the user terminal (102) is enabled by means of the mobile terminal (101) to perform the cryptographic operation with the data used in the user terminal (102).

## Revendications

1. Terminal de radiocommunication mobile (101) avec des moyens de processus adaptés pour exécuter une opération cryptographique avec des données, qui sont utilisées dans un terminal d'utilisateur (102) séparé, comprenant une interface de communication (113) servant à établir une connexion temporaire avec le terminal d'utilisateur (102), dans lequel l'interface de communication (113) est mise au point pour recevoir les données du terminal d'utilisateur (102), comprenant par ailleurs une unité de cryptographie (103), qui est configurée pour exécuter l'opération cryptographique avec les données reçues par l'intermédiaire de l'interface de communication (113) pour le terminal d'utilisateur (102), dans lequel l'unité de cryptographie (103) est contenue dans une unité d'identification d'abonné (112) du terminal de radiocommunication mobile (101), et le terminal de radiocommunication mobile (101) est mis au point pour transmettre le résultat de l'opération cryptographique par l'intermédiaire de l'interface de communication (113) au terminal d'utilisateur (102) de sorte que le terminal d'utilisateur (102) est amené au moyen du terminal de radiocommunication mobile (101) en position de mettre en œuvre l'opération cryptographique avec les données, qui sont utilisées dans le terminal d'utilisateur (102).

2. Terminal de radiocommunication mobile (101) selon la revendication 1, comprenant une unité de connexion (202) associée à l'unité de cryptographie (103), qui est configurée pour réceptionner les données reçues au moyen de l'interface de communication (113) et pour les transférer à l'unité de cryptographie (103) pour mettre en œuvre l'opération cryptographique.

3. Terminal de radiocommunication mobile (101) selon la revendication 2, dans lequel l'unité de connexion (202) est configurée par ailleurs pour recevoir un résultat de l'opération cryptographique de l'unité de cryptographie (103) et pour le transmettre au terminal d'utilisateur (102) par l'intermédiaire de l'interface de communication (113).

4. Terminal de radiocommunication mobile (101) selon la revendication 2, dans lequel l'unité de connexion (202) est contenue dans l'unité d'identification d'abonné (112) du terminal de radiocommunication mobile (101).

5. Terminal de radiocommunication mobile (101) selon l'une quelconque des revendications 2 - 4, dans lequel l'unité d'identification d'abonné (112) comprend une première partition (204) prévue avec des premiers droits d'accès et une deuxième partition prévue avec des deuxièmes droits d'accès, dans lequel la deuxième partition (205) est prévue pour mémoriser des applications, qui sont associées à l'interface de communication (113), et dans lequel l'unité de cryptographie (103) est contenue dans la première et l'unité de connexion (202) est contenue dans la deuxième partition.

6. Terminal de radiocommunication mobile (101) selon l'une quelconque des revendications 2 - 5, dans lequel une interface (203) adaptée aux opérations cryptographiques pouvant être exécutées dans l'unité de cryptographie (103) est mise au point pour une communication entre l'unité de cryptographie (103) et l'unité de connexion (202).

7. Terminal de radiocommunication mobile (101) selon la revendication 6, dans lequel des données peuvent être transmises par l'intermédiaire de l'interface (203) conjointement avec un ordre issu d'un jeu d'ordres et dans lequel le jeu d'ordres est constitué de respectivement un ordre pour les opérations cryptographiques assistées par l'unité de cryptographie (103).

8. Terminal de radiocommunication mobile (101) selon l'une quelconque des revendications précédentes, dans lequel le terminal de radiocommunication mobile (101) est configuré pour recevoir une saisie d'une information d'authentification et dans lequel l'unité de cryptographie (103) met en œuvre l'opération cryptographique après une vérification réalisée avec succès de la caractéristique d'authentification saisie.

9. Terminal de radiocommunication mobile (101) selon la revendication 8, dans lequel une demande de saisie de l'information d'authentification est émise du fait de la réception des données dans l'unité de cryptographie (103) avec le terminal de radiocommunication mobile (101).

10. Terminal de radiocommunication mobile (101) selon l'une quelconque des revendications précédentes, dans lequel l'opération cryptographique renferme au moins une action issue du groupe comprenant un cryptage des données, un décryptage des données et la génération d'une signature numérique.

11. Terminal de radiocommunication mobile (101) selon l'une quelconque des revendications précédentes, dans lequel l'interface de communication (113) est une interface pour une communication à courte portée.

12. Terminal de radiocommunication mobile (101) selon l'une quelconque des revendications précédentes, dans lequel l'unité d'identification d'abonné (112) est configurée sous la forme d'une carte à puce, qui est insérée de manière amovible dans le terminal de radiocommunication mobile (101).

13. Système servant à exécuter une opération cryptographique avec des données, comprenant un terminal de radiocommunication mobile (101) selon l'une quelconque des revendications précédentes ainsi que le terminal d'utilisateur (102).

14. Procédé servant à exécuter une opération cryptographique avec des données, qui sont utilisées dans un terminal d'utilisateur (102), dans lequel le procédé comprend des étapes suivantes :
- d'établissement d'une connexion temporaire entre le terminal d'utilisateur (102) et un terminal de radiocommunication mobile (101) séparé par l'intermédiaire d'une interface de communication (113) du terminal de radiocommunication mobile (101),
- de transmission des données par le terminal d'utilisateur (102) par l'intermédiaire de la connexion établie,
- de transfert des données à une unité de cryptographie (103) du terminal de radiocommunication mobile (101), dans lequel l'unité de cryptographie (103) est contenue dans une unité d'identification d'abonné (112) du terminal de radiocommunication mobile (101),
- d'exécution de l'opération cryptographique pour le terminal d'utilisateur (102) avec les données dans l'unité cryptographique (103) du terminal de radiocommunication mobile (101), et
- de transfert du résultat de l'opération cryptographique depuis le terminal de radiocommunication mobile (101) au terminal d'utilisateur (102) par l'intermédiaire de la connexion de sorte que le terminal d'utilisateur (102) est amené au moyen du terminal de radiocommunication mobile (101) en position de mettre en œuvre l'opération cryptographique avec les données, qui sont utilisées dans le terminal d'utilisateur (102).
